(19) **Europäisches Patentamt / European Patent Office / Office européen des brevets**

(11) **EP 4 648 248 A1**

(12) **EUROPEAN PATENT APPLICATION**
published in accordance with Art. 153(4) EPC

(43) Date of publication:
**12.11.2025 Bulletin 2025/46**

(21) Application number: **24830833.0**

(22) Date of filing: **26.06.2024**

(51) International Patent Classification (IPC):
**H02J 3/24** (2006.01)  **H02J 3/46** (2006.01)

(52) Cooperative Patent Classification (CPC):
**H02J 3/24; H02J 3/46**

(86) International application number:
**PCT/CN2024/101736**

(87) International publication number:
**WO 2025/002198 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 CN 202310787810**

(71) Applicant: **Huaneng Clean Energy Research Institute**
**Beijing 102209 (CN)**

(72) Inventors:
• **BA, Lei**
 **Beijing 102209 (CN)**
• **GUO, Xiaojiang**
 **Beijing 102209 (CN)**
• **HE, Weiguo**
 **Beijing 102209 (CN)**
• **LI, Zheng**
 **Beijing 102209 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS FOR FREQUENCY REGULATION OF POWER GRID HAVING WIND TURBINE PARTICIPATION**

(57) The present invention discloses a frequency regulation method and device for a power grid using a wind turbine, wherein the method comprises steps of: real-time achieving a frequency information of the power grid at a connection point of the wind turbine and a wind speed information of the wind turbine, wherein the frequency information comprises a frequency deviation and a rate of change of frequency; in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine; determining a deloading information of frequency regulation for the power grid using a wind turbine according to the determined adaptive deloading coefficient, the frequency deviation and the wind speed information of the wind turbine; performing frequency regulation on the power grid using the wind turbine according to the deloading information and the wind speed information of the wind turbine. By the present invention, the deloading of frequency regulation at different times for the power grid using a wind turbine can be effectively controlled, and the accuracy of the frequency regulation for the power grid using a wind turbine can be improved.

**(Cont. next page)**

EP 4 648 248 A1

Real-time achieving a frequency information of the power grid at a connection point of the wind turbine and a wind speed information of the wind turbine ⎯ 101

In response to the frequency deviation being greater than a deviation threshold, determining an adaptive deloading coefficient according to the rate of change of frequency ⎯ 102

Determining a deloading information of frequency regulation for the power grid using a wind turbine according to the determined adaptive deloading coefficient, the frequency deviation and the wind speed information of the wind turbine ⎯ 103

Performing frequency regulation on the power grid using a wind turbine according to the deloading information and the wind speed information of the wind turbine ⎯ 104

Fig.1

**Description**

## FIELD OF THE INVENTION

The present invention relates to the field of new energy, particularly to a frequency regulation method and device for a power grid using a wind turbine.

## BACKGROUND OF THE INVENTION

With the increasing proportion of new energy in the power grid, the traditional power generation units dominated by the thermal power units are decreasing, and the problem of grid frequency stability is becoming increasingly prominent. Therefore, more and more countries and regions are increasing their requirements on frequency regulation for power grids using new energy by modifying and updating power grid guidelines.

When performing frequency regulation on the power grid using a wind turbine, a new additional wind turbine frequency response controller is used to support the frequency of the power grid. The input of the wind turbine frequency response controller is the frequency deviation of the power grid at a connection point of the wind turbine, which controls the active power output of the wind turbine support frequency.

The active power output by the existing wind turbine frequency response controller usually participates in the power grid by releasing the kinetic energy stored in the wind turbine rotor. This solution is only feasible for short-term power grid frequency support. In order to solve the problem of grid frequency drop that needs to be supported for a long time, if the wind turbine releases a large amount of kinetic energy, problems such as wind turbine stall may occur, causing the entire system to become unstable.

Therefore, research can be conducted to the deloading of wind turbine to provide backup capacity for the frequency regulation of the power grid using a wind turbine, ensuring a constant active power output when performing the frequency regulation on the power grid using a wind turbine, and thus making the way of the wind turbine continuously participating in power grid frequency regulation feasible. However, the existing wind turbine deloading control only selects a single wind turbine deloading amount based on former experience, and its deloading effect cannot be effectively applied to the deloading control of the frequency regulation for the power grid using a wind turbine at all times in the power system, which also affects the accuracy of the frequency regulation for the power grid using a wind turbine.

## SUMMARY OF THE INVENTION

The present invention provides a frequency regulation method and device for a power grid using a wind turbine to resolve at least one of the issues mentioned above.

According to a first aspect of the present invention, there is provided a frequency regulation method for a power grid using a wind turbine, comprising steps of: real-time achieving a frequency information of the power grid at a connection point of the wind turbine and a wind speed information of the wind turbine, wherein the frequency information comprises a frequency deviation and a rate of change of frequency; in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine; determining a deloading information of frequency regulation for the power grid using a wind turbine according to the determined adaptive deloading coefficient, the frequency deviation and the wind speed information of the wind turbine; performing frequency regulation on the power grid using the wind turbine according to the deloading information and the wind speed information of the wind turbine.

Preferably, the step of determining a deloading information of frequency regulation for the power grid using a wind turbine according to the determined adaptive deloading coefficient, the frequency deviation and the wind speed information of the wind turbine comprises: determining a maximum power corresponding to the wind speed information of the wind turbine according to the wind speed information of the wind turbine; determining the deloading information of frequency regulation for the power grid using the wind turbine according to the determined adaptive deloading coefficient, the frequency deviation and the maximum power.

Furthermore, the step of performing frequency regulation on the power grid using the wind turbine according to the deloading information and the wind speed information of the wind turbine comprises: determining an active power for the frequency regulation on the power grid using the wind turbine according to the deloading information and the maximum power; performing frequency regulation on the power grid using the wind turbine according to the determined active power.

Specifically, the step of real-time achieving the frequency information of the power grid at a connection point of the wind turbine comprises: real-time achieving a current frequency of the power grid at a connection point of the wind turbine; determining the frequency deviation according to the current frequency and a rated frequency; determining the rate of change of frequency according to the current frequency and the previous frequency of the power grid at a connection point of the wind turbine.

Specifically, the step of determining an adaptive deloading coefficient according to the rate of change of frequency comprises: determining the adaptive deloading coefficient according to the rate of change of frequency and its weight, the wind speed information of the wind turbine and its weight.

Furthermore, the adaptive deloading coefficient is set in the following manner: in response to a first rate of change of frequency being less than a predetermined value, setting the adaptive deloading coefficient according to the first rate of change of frequency and its first frequency weight, a first wind speed information of the wind turbine and its first wind speed weight; in response to a second rate of change of frequency being equal to the predetermined value, setting the adaptive deloading coefficient according to the second rate of change of frequency, a second wind speed information of the wind turbine and a second weight; in response to a third rate of change of frequency being greater than the predetermined value, setting the adaptive deloading coefficient according to the third rate of change of frequency and its third frequency weight, a third wind speed information of the wind turbine and its third wind speed weight.

According to a second aspect of the present invention, there is provided a frequency regulation device for a power grid using a wind turbine, comprising: an information achieving unit for real-time achieving a frequency information of the power grid at a connection point of the wind turbine and a wind speed information of the wind turbine, wherein the frequency information comprises a frequency deviation and a rate of change of frequency; an adaptive coefficient determination unit for in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine; a deloading information determination unit for determining a deloading information of frequency regulation for the power grid using a wind turbine according to the determined adaptive deloading coefficient, the frequency deviation and the wind speed information of the wind turbine; a frequency regulation unit for performing frequency regulation on the power grid using the wind turbine according to the deloading information and the wind speed information of the wind turbine.

Specifically, the deloading information determination unit comprises: a maximum power determination module for determining a maximum power corresponding to the wind speed information of the wind turbine according to the wind speed information of the wind turbine; a deloading information determination module for determining the deloading information of frequency regulation for the power grid using the wind turbine according to the determined adaptive deloading coefficient, the frequency deviation and the maximum power.

Furthermore, the frequency regulation unit comprises: an active power determination module for determining an active power for the frequency regulation on the power grid using the wind turbine according to the deloading information and the maximum power; a frequency regulation module for performing frequency regulation on the power grid using the wind turbine according to the determined active power.

Specifically, the device further comprises an adaptive coefficient setting unit for setting the adaptive deloading coefficient in the following manner: in response to a first rate of change of frequency being less than a predetermined value, setting the adaptive deloading coefficient according to the first rate of change of frequency and its first frequency weight, a first wind speed information of the wind turbine and its first wind speed weight; in response to a second rate of change of frequency being equal to the predetermined value, setting the adaptive deloading coefficient according to the second rate of change of frequency, a second wind speed information of the wind turbine and a second weight; in response to a third rate of change of frequency being greater than the predetermined value, setting the adaptive deloading coefficient according to the third rate of change of frequency and its third frequency weight, a third wind speed information of the wind turbine and its third wind speed weight.

Furthermore, the present invention further provides a computer apparatus, which comprises a memory, a processor, and a computer program stored in the memory and executable on the processor, and the above method is implemented when the processor executes the computer program.

Furthermore, the present invention further provides a computer-readable storage medium, which stores a computer program for executing the above method.

It can be seen from the above technical solution that by real-time acquiring the frequency information of the power grid at a connection point of the wind turbine and a wind speed information of the wind turbine, when the frequency deviation is greater than the deviation threshold, the adaptive deloading coefficient is determined according to the rate of change of frequency. Then, the deloading information of frequency regulation for the power grid using the wind turbine is determined according to the determined adaptive deloading coefficient, the frequency deviation and the wind speed information of the wind turbine. Then, the frequency regulation is performed on the power grid using the wind turbine according to the deloading information and the wind speed information of the wind turbine. The adaptive deloading coefficient of the technical solution is set based on the rate of change of frequency and the wind speed information of the wind turbine, and different adaptive deloading coefficients can be set at different stages when performing frequency regulation on the power grid using the wind turbine, so that the deloading amount in different frequency regulation stages can be obtained, so that the deloading of frequency regulation at different times for the power grid using a wind turbine can be effectively controlled, and in turn the accuracy of the frequency regulation for the power grid using a wind turbine can be improved.

In order to make the above and other objectives, features and advantages of the present invention more apparent and understandable, the following preferred examples are presented and in accordance with the attached drawings, a detailed explanation is as follows.

## BRIEF DESCRIPTION OF THE DRAWINGS

In order to more clearly illustrate the examples of the present invention or the technical solutions in the prior art, the drawings required for use in the examples or the description of the prior art will be briefly introduced below. Obviously, the drawings described below are only some examples of the present invention. For the ordinary skilled person in the art, other drawings can be obtained based on these drawings without paying creative work.

Fig.1 is a flowchart of a frequency regulation method for a power grid using a wind turbine according to an example of the present invention;

Fig.2 is a schematic diagram of the power-rotation speed curve of a wind turbine at different wind speeds according to an example of the present invention;

Fig.3 is a schematic diagram of the time-varying curve of the adaptive deloading coefficient according to an example of the present invention;

Fig.4 is a flowchart of frequency regulation and deloading for a power grid using a wind turbine based on adaptive control according to an example of the present invention;

Fig.5 is a block diagram of a frequency regulation device for a power grid using a wind turbine according to an example of the present invention.

## DETAILED DESCRIPTION OF THE INVENTION

Below, the technical solutions in the examples of the present invention will be clearly and completely described in conjunction with the accompanying drawings. Obviously, the described examples are only a part of the examples of the present invention, not all examples. Based on the examples of the present invention, all other examples obtained by the ordinary skilled person in the art without creative work are within the protection scope of the present invention.

In the process of implementing this application, the applicant found that:

Long-time active power output of the wind turbine can support the frequency of the power grid, and it can ensure stable active power output of frequency regulation for power grid using a wind turbine by reducing the load on the wind turbine. However, the existing wind turbine deloading control only selects a single wind turbine deloading amount based on former experience, and its deloading effect cannot be effectively applied to the deloading control of the frequency regulation for the power grid using a wind turbine at all times in the power system, which in turn affects the accuracy of the frequency regulation for the power grid using a wind turbine.

In view of this, the examples of the present invention provide a frequency regulation method for a power grid using a wind turbine. According to this method, different adaptive deloading coefficients can be set at different stages when performing frequency regulation on the power grid using the wind turbine, so that the deloading amount in different frequency regulation stages can be obtained, so that the deloading of frequency regulation at different times for the power grid using a wind turbine can be effectively controlled, and the accuracy of the frequency regulation for the power grid using a wind turbine can be improved.

The following provides a detailed description of the examples of the present invention in conjunction with the accompanying drawings.

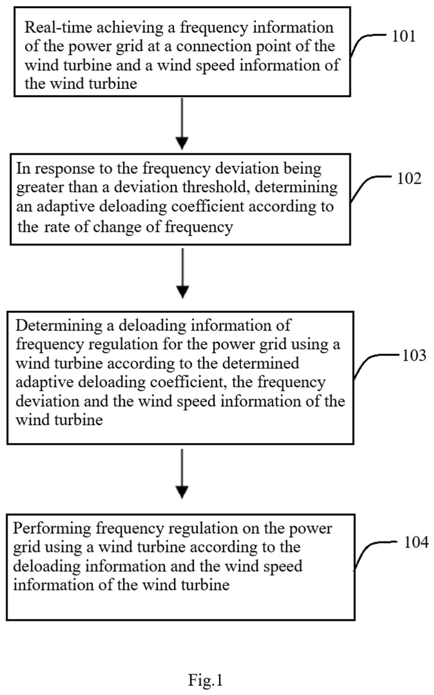

Fig.1 is a flowchart of a frequency regulation method for a power grid using a wind turbine according to an example of the present invention. As shown in Fig.1, the method comprises:

Step 101: Real-time achieving a frequency information of the power grid at a connection point of the wind turbine and a wind speed information of the wind turbine, wherein the frequency information comprises a frequency deviation and a rate of change of frequency.

When implementing this step, a current frequency of the power grid at a connection point of the wind turbine is real-time achieved; meantime, the frequency deviation is determined according to the current frequency and a rated frequency; and the rate of change of frequency is determined according to the current frequency and the previous frequency of the power grid at a connection point of the wind turbine.

Step 102: In response to the frequency deviation being greater than a deviation threshold, determining an adaptive deloading coefficient according to the rate of change of frequency, wherein the adaptive deloading coefficient is set based on the rate of change of frequency and the wind speed information of the wind turbine.

In an example, the adaptive deloading coefficient can be determined according to the rate of change of frequency and its weight, the wind speed information of the wind turbine and its weight.

Specifically, in response to a first rate of change of frequency being less than a predetermined value, the adaptive deloading coefficient is set according to the first rate of change of frequency and its first frequency weight, a first wind speed information of the wind turbine and its first wind speed weight;

in response to a second rate of change of frequency being equal to the predetermined value, the adaptive deloading coefficient is set according to the second rate of change of frequency, a second wind speed information of the wind turbine and a second weight;

in response to a third rate of change of frequency being greater than the predetermined value, the adaptive deloading coefficient is set according to the third rate of change of frequency and its third frequency weight, a third wind speed information of the wind turbine and its third wind speed weight.

For example, if the predetermined value is 0, and the rate of change of frequency is less than 0, that is, the current frequency is lower than the previous frequency, $f_t - f_{t-1} < 0$, then the adaptive deloading coefficient can be set based on the rate of change of frequency and its frequency weight, as well as the corresponding wind speed information and its wind speed weight. Similarly, when the rate of change of frequency is greater than or equal to 0, the adaptive deloading coefficient is set in a similar way.

In practical operation, due to the rapid rate and large deviation of the initial frequency drop in the power grid, the adaptive deloading coefficient should be selected as a larger value; when the power grid frequency reaches its lowest point and then begins to recover, the adaptive deloading coefficient should be continuously reduced to bring the wind turbine back to a stable operating point.

Step 103: Determining a deloading information of frequency regulation for the power grid using a wind turbine according to the determined adaptive deloading coefficient, the frequency deviation and the wind speed information of the wind turbine;

Step 104: Performing frequency regulation on the power grid using the wind turbine according to the deloading information and the wind speed information of the wind turbine.

In an example, when implementing the above step 103, a maximum power corresponding to the wind speed information of the wind turbine can be determined according to the wind speed information of the wind turbine; then the deloading information of frequency regulation for the power grid using the wind turbine is determined according to the determined adaptive deloading coefficient, the frequency deviation and the maximum power.

Furthermore, when implementing the above step 104, an active power for the frequency regulation on the power grid using the wind turbine can be determined according to the deloading information and the maximum power; then the frequency regulation on the power grid using the wind turbine is performed according to the determined active power.

That is to say, in the process of implementing the examples of the present invention, the relationship between the power of the wind turbine at different wind speeds and the wind speed of the wind turbine can be obtained. In one example, the wind speed of the wind turbine can be represented by the rotation speed of the wind turbine.

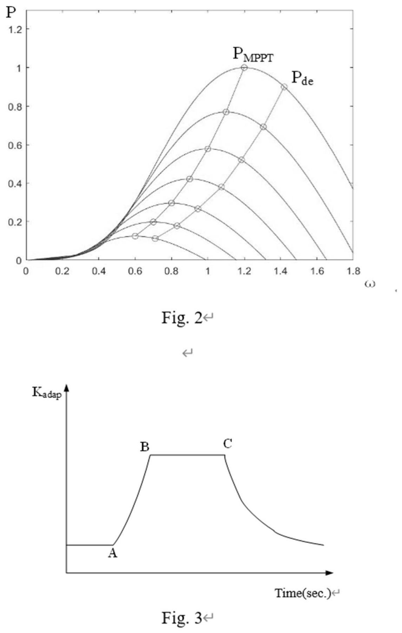

Fig.2 is a schematic diagram of the power-rotation speed curve of a wind turbine at different wind speeds according to an example of the present invention. As shown in Fig.2, usually, the wind turbine operates at the maximum power tracking point $P_{MPPT}$ (corresponding to the maximum power mentioned above) to achieve maximum power tracking. When performing frequency regulation of the power grid using a wind turbine, the rotation speed of the wind turbine will decrease, and there is a risk of instability in the wind turbine. When the wind turbine is operated under deloading control, the operating curve of the wind turbine will decrease, $P_{de}$ as shown in Fig. 2. At this time, the allowable active power output $\Delta P_{FR}$ (corresponding to the active power mentioned above) based on the frequency response of the power grid using a wind turbine is calculated by using the following formula (1):

$$\Delta P_{FR} = P_{MPPT} - P_{de} = d_{rate} \cdot P_{MPPT} \qquad (1)$$

wherein, $d_{rate}$ is the deloading rate of the wind turbine (corresponding to the deloading information mentioned above). The above $P_{MPPT}$ can be expressed by the following formula (2):

$$P_{MPPT} = \frac{1}{2} \rho S C_p V_w^{\,3} \qquad (2)$$

$$\delta = -\frac{\Delta f}{\Delta P_{FR}} \qquad (3)$$

wherein, $\rho$ is the air density, $S$ is the swept area of the wind turbine blades, $C_p$ is the wind energy utilization coefficient of the wind turbine, $V_w$, is the wind speed, $\delta$ is the adjustment coefficient, $\Delta f$ is the frequency deviation of the power grid.

According to the above formula, the relationship between the frequency deviation of the power grid with wind turbine response and the deloading rate and the wind speed can be derived, as shown in the following formula (4):

$$\Delta f = -\frac{1}{2}\rho S C_p \delta d_{rate} V_w^{\ 3} \qquad (4)$$

According to formula (4), it can be seen that the frequency deviation of the power grid is affected by the deloading rate and the wind speed of a wind turbine. That is to say, the deloading rate of a wind turbine is also affected by the frequency deviation and wind speed of a power grid. Therefore, under different frequency deviations of the power grid and different wind speeds, the deloading rate of a wind turbine should be different.

Therefore, in the examples of the present invention, at different stages of frequency regulation for the power grid using a wind turbine, different deloading rates can be used to more accurately modulate the frequency of the power grid using a wind turbine. In contrast, the deloading effect of using the deloading amount from a single wind turbine in the prior art cannot be effectively applied to the deloading control of frequency regulation at different times of the power grid using a wind turbine in the power system, which further affects the accuracy of frequency regulation of the power grid using a wind turbine.

In the examples of the present invention, by real-time acquiring the frequency information of the power grid at a connection point of the wind turbine and a wind speed information of the wind turbine, when the frequency deviation is greater than the deviation threshold, the adaptive deloading coefficient is determined according to the rate of change of frequency. Then, the deloading information of frequency regulation for the power grid using the wind turbine is determined according to the determined adaptive deloading coefficient, the frequency deviation and the wind speed information of the wind turbine. Then the frequency regulation is performed on the power grid using a wind turbine according to the deloading information and the wind speed information of the wind turbine. In the examples of the present invention, the adaptive deloading coefficient is set based on the rate of change of frequency and the wind speed information of the wind turbine. Different adaptive deloading coefficients can be set at different stages when performing frequency regulation on the power grid using the wind turbine, so that the deloading amount in different frequency regulation stages can be obtained, so that the deloading of frequency regulation at different times for the power grid using a wind turbine can be effectively controlled, and in turn the accuracy of the frequency regulation for the power grid using a wind turbine can be improved.

In order to better understand the present invention, the process of setting the adaptive deloading coefficient is described in detail below.

In practical operations, due to the rapid rate and large deviation of frequency drop at the early stage of frequency drop of the power grid, the adaptive deloading coefficient should be selected as a larger value; when the power grid frequency reaches its lowest point and begins to recover, the adaptive deloading coefficient should be continuously reduced to bring the wind turbine back to a stable operating point.

Fig.3 is a schematic diagram of the time-varying curve of the adaptive deloading coefficient, wherein, point A represents the moment when the power grid frequency begins to drop, and point C represents the moment when the power grid frequency begins to recover after reaching its lowest point.

According to the different stages of frequency regulation for the power grid using a wind turbine, an adaptive deloading coefficient $k_{adap}$ ($df/dt, V_w$) is established, which is represented by the following formula (5):

$$k_{adap}\left(df/dt, V_w\right) = \begin{cases} k_{11}\left(df/dt\right)^3 + k_{12}\left(V_w/V_{w,rate}\right)^3, t_A < t < t_B \\ k_2\left(df/dt + V_w/V_{w,rate}\right), t_B < t < t_C \\ k_{31}\left(df/dt\right)^2 + k_{32}\left(V_w/V_{w,rate}\right)^2, t > t_C \end{cases} \qquad (5)$$

wherein, f is frequency, $V_w$ is wind speed, $k_{11}$, $k_2$, $k_{31}$ are the weights of the rate of change of frequency at different stages, $k_{12}$, $k_2$, $k_{32}$ are the weights of the wind speed at different stages, $V_{w,rate}$ is the rated value of the wind speed; $t_A$, $t_B$, $t_C$ are the time points corresponding to points A, B, and C in Fig. 3, respectively.

According to the relationship between the deloading rate and the rate of change of frequency of the power grid and wind speed during frequency regulation for the power grid using a wind turbine, the deloading rate of the wind turbine can be obtained as shown in formula (6) below:

$$d_{rate} = \frac{k_{adap}(df/dt, V_w)\Delta f}{P_{MPPT}} \qquad (6)$$

Based on the obtained deloading rate and combined with the above formula (1), it can obtain the active power required for frequency regulation of the current power grid using a wind turbine. Therefore, frequency regulation of the power grid using a wind turbine can be carried out according to the determined active power.

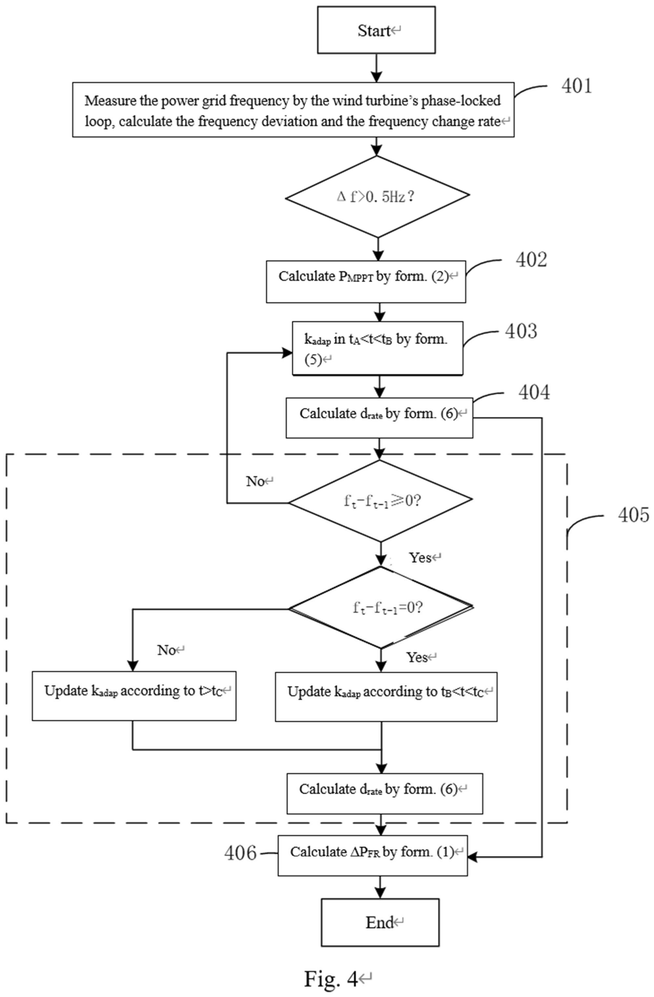

Based on the above description, the process of frequency regulation and deloading for a power grid using a wind turbine based on adaptive control is described in detail below in conjunction with Fig.4.

As shown in Fig.4, the process comprises steps of 401-406:

Step 401: Real-time tracking and measuring the frequency of the power grid at a connection point of the wind turbine by the wind turbine's phase-locked loop and obtaining the current rotation speed (or wind speed), and achieving the frequency deviation and the rate of change of frequency by calculation. When the observed frequency deviation of the power grid is greater than 0.5Hz, it indicates that the power grid frequency has dropped. At this time, the wind turbine starts to respond to the power grid frequency by outputting active power.

Step 402: Obtaining the maximum power $P_{MPPT}$ at the current wind speed by combining with Fig. 2.

Step 403: According to the rate of change of frequency obtained in step 401 and the current wind speed, selecting the time period $t_A < t < t_B$ in formula (5) to obtain the adaptive deloading coefficient $k_{adap}$.

Step 404: Calculating the deloading rate that the wind turbine should operate at this time using formula (6), and performing step 406.

Step 405: Measuring the change in wind speed in seconds and updating the deloading rate according to formula (6).

Specifically, the change in frequency between the current moment and the previous moment is determined. If $f_t - f_{t-1} < 0$, then continue to calculate the adaptive coefficient $k_{adap}$ according to $t_A < t < t_B$ in formula (5); if $f_t - f_{t-1} = 0$, then continue to calculate the adaptive coefficient $k_{adap}$ according to $t_B < t < t_C$ in formula (5); if $f_t - f_{t-1} > 0$, then continue to calculate the adaptive coefficient $k_{adap}$ according to $t > t_C$ in formula (5). After obtaining the current adaptive coefficient $k_{adap}$, the deloading rate at which the wind turbine should operate is calculated by using formula (6).

Step 406: achieving the active power of the wind turbine that can participate in the frequency modulation of the power grid by calculation according to formula (1) at this moment.

In view of the problem that the frequency regulation capability of the participated power system is different due to the different powers of wind turbines at different wind speeds, the examples of the present invention propose a frequency regulation and deloading process based on adaptive control for the power grid using a wind turbine. According to the wind speed, frequency deviation and the rate of change of frequency, the present invention dynamically adjusts the wind power deloading rate by using an adaptive control method. This process can select the optimal operating point for wind turbine deloading to ensure that the wind turbine operates at the optimal deloading point, reducing the excess active power stored in the wind power system during frequency regulation and deloading for the power grid using a wind turbine.

Based on the similar inventive concepts, the examples of the present invention further provide a frequency regulation device for a power grid using a wind turbine, which can preferably implement the above processes of the frequency regulation method for the power grid using a wind turbine.

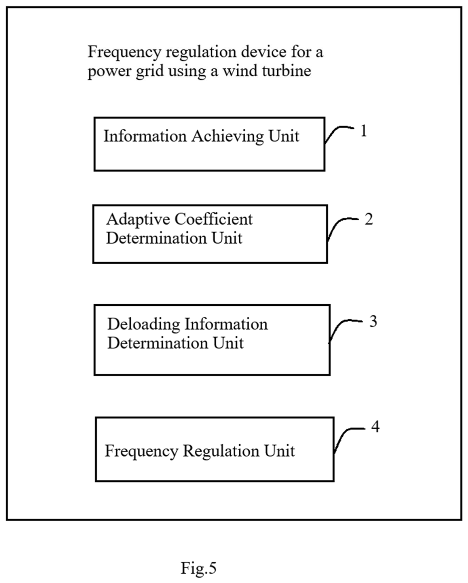

Fig.5 is a block diagram of a frequency regulation device for a power grid using a wind turbine. As shown in Fig.5, the device comprises: an information achieving unit 1, an adaptive coefficient determination unit 2, a deloading information determination unit 3, a deloading information determination unit4, wherein:

the information achieving unit 1 is used for real-time achieving a frequency information of the power grid at a connection point of the wind turbine and a wind speed information of the wind turbine, wherein the frequency information comprises a frequency deviation and a rate of change of frequency.

the adaptive coefficient determination unit 2 is used for in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine.

Specially, the adaptive coefficient determination unit 2 determines the adaptive deloading coefficient according to the rate of change of frequency and its weight, the wind speed information of the wind turbine and its weight.

The deloading information determination unit 3 is used for determining a deloading information of frequency regulation for the power grid using a wind turbine according to the determined adaptive deloading coefficient, the frequency deviation and the wind speed information of the wind turbine.

The frequency regulation unit 4 is used for performing frequency regulation on the power grid using the wind turbine according to the deloading information and the wind speed information of the wind turbine.

The information achieving unit 1 real-time achieves a frequency information of the power grid at a connection point of the wind turbine and a wind speed information of the wind turbine. When the frequency deviation is greater than a deviation threshold, the adaptive coefficient determination unit 2 determines an adaptive deloading coefficient according to the rate of change of frequency. Then, the deloading information determination unit 3 determines a deloading information of frequency regulation for the power grid using the wind turbine according to the determined adaptive deloading coefficient, the frequency deviation and the wind speed information of the wind turbine. After that, the frequency regulation unit 4 performs frequency regulation on the power grid using the wind turbine according to the deloading information and the wind speed information of the wind turbine. In the examples of the present invention, the adaptive deloading coefficient is set based on the rate of change of frequency and the wind speed information of the wind turbine, and different adaptive deloading coefficients can be set at different stages when performing frequency regulation on the power grid using the wind turbine, so that the deloading amount in different frequency regulation stages can be obtained, so that the deloading of frequency regulation at different times for the power grid using a wind turbine can be effectively controlled, and in turn the accuracy of the frequency regulation for the power grid using a wind turbine can be improved.

In one example, the information achieving unit 1 specifically comprises a frequency achieving module, a frequency deviation determination module, and a rate of change of frequency determination module, wherein:

the frequency achieving module is used to obtain the real-time current frequency of the power grid at a connection point of the wind turbine;
the frequency deviation determination module is used to determine the frequency deviation based on the current frequency and rated frequency;
the rate of change of frequency determination module is used to determine the rate of change of frequency based on the current frequency and the previous frequency of the power grid at a connection point of the wind turbine.

In one example, the above deloading information determination unit 3 comprises: a maximum power determination module and a deloading information determination module, wherein:

the maximum power determination module is used for determining a maximum power corresponding to the wind speed information of the wind turbine according to the wind speed information of the wind turbine;
the deloading information determination module is used for determining the deloading information of frequency regulation for the power grid using the wind turbine according to the determined adaptive deloading coefficient, the frequency deviation and the maximum power.

The above frequency regulation unit 4 comprises: an active power determination module and a frequency regulation module, wherein:

the active power determination module is used for determining an active power for the frequency regulation on the power grid using the wind turbine according to the deloading information and the maximum power;
the frequency regulation module is used for performing frequency regulation on the power grid using the wind turbine according to the determined active power.

The above device further comprises: an adaptive coefficient setting unit for setting the adaptive deloading coefficient in the following manner: in response to a first rate of change of frequency being less than a predetermined value, setting the adaptive deloading coefficient according to the first rate of change of frequency and its first frequency weight, a first wind speed information of the wind turbine and its first wind speed weight; in response to a second rate of change of frequency being equal to the predetermined value, setting the adaptive deloading coefficient according to the second rate of change of frequency, a second wind speed information of the wind turbine and a second weight; in response to a third rate of change of frequency being greater than the predetermined value, setting the adaptive deloading coefficient according to the third rate of change of frequency and its third frequency weight, a third wind speed information of the wind turbine and its third wind speed weight.

The specific execution process of the above units and modules can be found in the descriptions of the above method examples, and here won't repeated.

In actual operation, the above units and modules may be provided in combination or individually, and the present invention is not limited thereto.

The example further provides an electronic apparatus, which includes a memory, a processor, and a computer program stored in the memory and executable on the processor. The electronic apparatus may be a desktop computer, a tablet computer, a mobile terminal, etc., but the example is not limited thereto. In the example, the electronic apparatus may be implemented with reference to the above method example and the example of the frequency regulation device for the power grid using a wind turbine, the contents of which are incorporated herein, and the repeated parts are not repeated.

The present invention further provides a computer-readable storage medium having a computer program stored thereon. When the computer program is executed by a processor, it implements the steps of the above method of the frequency regulation for the power grid using a wind turbine.

In summary, in view of the problem of different capabilities of participating in power system frequency regulation caused by different powers of wind turbines at different wind speeds, the examples of the present invention propose a solution for frequency regulation and deloading control of power grids using a wind turbine. According to the wind speed, frequency deviation and the rate of change of frequency, the present invention uses adaptive control to dynamically adjust the optimal wind power deloading rate. This scheme can select the optimal wind turbine deloading operation point to ensure that the wind turbine operates at the optimal deloading point, improve the accuracy of frequency regulation on power grids using a wind turbine and reduce the excess active power stored in the wind power system when participating in the frequency regulation and deloading of the power grid.

The present invention uses specific examples to illustrate the principles and implementation methods of the present invention. The description of the above examples is only used to help understanding the method of the present invention and its core idea. At the same time, for the skilled person in the art, according to the idea of the present invention, there will be changes in the specific implementation methods and application scope. In summary, the content of this specification should not be understood as a limitation on the present invention.

**Claims**

1.    A frequency regulation method for a power grid using a wind turbine, **characterized by** comprising steps of:

   real-time achieving a frequency information of the power grid at a connection point of the wind turbine and a wind speed information of the wind turbine, wherein the frequency information comprises a frequency deviation and a rate of change of frequency;
   in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine;
   determining a deloading information of frequency regulation for the power grid using a wind turbine according to the determined adaptive deloading coefficient, the frequency deviation and the wind speed information of the wind turbine;
   performing frequency regulation on the power grid using a wind turbine according to the deloading information and the wind speed information of the wind turbine.

2.    The method according to claim 1, **characterized in that** the step of determining a deloading information of frequency regulation for the power grid using a wind turbine according to the determined adaptive deloading coefficient, the frequency deviation and the wind speed information of the wind turbine comprises:

   determining a maximum power corresponding to the wind speed information of the wind turbine according to the wind speed information of the wind turbine;
   determining the deloading information of frequency regulation for the power grid using the wind turbine according to the determined adaptive deloading coefficient, the frequency deviation and the maximum power.

3.    The method according to claim 2, **characterized in that** the step of performing frequency regulation on the power grid using the wind turbine according to the deloading information and the wind speed information of the wind turbine comprises:

   determining an active power for the frequency regulation on the power grid using the wind turbine according to the deloading information and the maximum power;
   performing frequency regulation on the power grid using the wind turbine according to the determined active power.

4.    The method according to claim 1, **characterized in that** the step of real-time achieving the frequency information of the power grid at a connection point of the wind turbine comprises:

   real-time achieving a current frequency of the power grid at a connection point of the wind turbine;
   determining the frequency deviation according to the current frequency and a rated frequency;

determining the rate of change of frequency according to the current frequency and the previous frequency of the power grid at a connection point of the wind turbine.

5. The method according to claim 1, **characterized in that** the step of determining an adaptive deloading coefficient according to the rate of change of frequency comprises:
determining the adaptive deloading coefficient according to the rate of change of frequency and its weight, the wind speed information of the wind turbine and its weight.

6. The method according to claim 1, **characterized in that** the adaptive deloading coefficient is set in the following manner:

in response to a first rate of change of frequency being less than a predetermined value, setting the adaptive deloading coefficient according to the first rate of change of frequency and its first frequency weight, a first wind speed information of the wind turbine and its first wind speed weight;
in response to a second rate of change of frequency being equal to the predetermined value, setting the adaptive deloading coefficient according to the second rate of change of frequency, a second wind speed information of the wind turbine and a second weight;
in response to a third rate of change of frequency being greater than the predetermined value, setting the adaptive deloading coefficient according to the third rate of change of frequency and its third frequency weight, a third wind speed information of the wind turbine and its third wind speed weight.

7. A frequency regulation device for a power grid using a wind turbine, **characterized by** comprising:

an information achieving unit for real-time achieving a frequency information of the power grid at a connection point of the wind turbine and a wind speed information of the wind turbine, wherein the frequency information comprises a frequency deviation and a rate of change of frequency;
an adaptive coefficient determination unit for in response to the frequency deviation being greater than a deviation threshold, determining an adaptive deloading coefficient according to the rate of change of frequency, wherein the adaptive deloading coefficient is set based on the rate of change of frequency and the wind speed information of the wind turbine;
a deloading information determination unit for determining a deloading information of frequency regulation for the power grid using a wind turbine according to the determined adaptive deloading coefficient, the frequency deviation and the wind speed information of the wind turbine;
a frequency regulation unit for performing frequency regulation on the power grid using the wind turbine according to the deloading information and the wind speed information of the wind turbine.

8. The device according to claim 7, **characterized in that** the deloading information determination unit comprises:

a maximum power determination module for determining a maximum power corresponding to the wind speed information of the wind turbine according to the wind speed information of the wind turbine;
a deloading information determination module for determining the deloading information of frequency regulation for the power grid using the wind turbine according to the determined adaptive deloading coefficient, the frequency deviation and the maximum power.

9. The device according to claim 8, **characterized in that** the frequency regulation unit comprises:

an active power determination module for determining an active power for the frequency regulation on the power grid using the wind turbine according to the deloading information and the maximum power;
a frequency regulation module for performing frequency regulation on the power grid using the wind turbine according to the determined active power.

10. The device according to claim 7, **characterized in that** the device further comprises an adaptive coefficient setting unit for setting the adaptive deloading coefficient in the following manner:

in response to a first rate of change of frequency being less than a predetermined value, setting the adaptive deloading coefficient according to the first rate of change of frequency and its first frequency weight, a first wind speed information of the wind turbine and its first wind speed weight;
in response to a second rate of change of frequency being equal to the predetermined value, setting the adaptive deloading coefficient according to the second rate of change of frequency, a second wind speed information of the wind turbine and a second weight;

in response to a third rate of change of frequency being greater than the predetermined value, setting the adaptive deloading coefficient according to the third rate of change of frequency and its third frequency weight, a third wind speed information of the wind turbine and its third wind speed weight.

| Real-time achieving a frequency information of the power grid at a connection point of the wind turbine and a wind speed information of the wind turbine | — 101 |

| In response to the frequency deviation being greater than a deviation threshold, determining an adaptive deloading coefficient according to the rate of change of frequency | — 102 |

| Determining a deloading information of frequency regulation for the power grid using a wind turbine according to the determined adaptive deloading coefficient, the frequency deviation and the wind speed information of the wind turbine | — 103 |

| Performing frequency regulation on the power grid using a wind turbine according to the deloading information and the wind speed information of the wind turbine | — 104 |

Fig.1

Fig. 2

Fig. 3

Fig. 4

Fig.5

## INTERNATIONAL SEARCH REPORT

| | International application No. |
|---|---|
| | **PCT/CN2024/101736** |

| A. | CLASSIFICATION OF SUBJECT MATTER |
|---|---|

H02J3/24(2006.01)i;  H02J3/46(2006.01)i

According to International Patent Classification (IPC) or to both national classification and IPC

| B. | FIELDS SEARCHED |
|---|---|

Minimum documentation searched (classification system followed by classification symbols)

IPC:  H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 风机, 调频, 减载, 频率, 偏差, 变化率, 风速, 自适应, wind turbin, frequency, modulat+, load, reduc+, frequency, deviation, change rate, wind speed, adaptive

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116799817 A (CHINA HUANENG GROUP CLEANING ENERGY TECHNOLOGY RESEARCH INSTITUTE CO., LTD. et al.) 22 September 2023 (2023-09-22) description, paragraphs 32-100, and figures 1-5 | 1-10 |
| A | CN 109494769 A (NORTH CHINA ELECTRIC POWER UNIVERSITY) 19 March 2019 (2019-03-19) description, paragraphs 35-122, and figures 1-8 | 1-10 |
| A | CN 111884267 A (NORTH CHINA ELECTRIC POWER UNIVERSITY (BAODING)) 03 November 2020 (2020-11-03) entire document | 1-10 |
| A | CN 112994048 A (ELECTRIC POWER RESEARCH INSTITUTE OF STATE GRID JIANGXI ELECTRIC POWER CO., LTD. et al.) 18 June 2021 (2021-06-18) entire document | 1-10 |
| A | CN 114336671 A (HUANENG RENEWABLES CORPORATION LIMITED et al.) 12 April 2022 (2022-04-12) entire document | 1-10 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 September 2024** | **14 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/101736** |

**C. DOCUMENTS CONSIDERED TO BE RELEVANT**

| Category* | Citation of document, with indication, where appropriate, of the relevant passages | Relevant to claim No. |
|---|---|---|
| A | US 8922043 B1 (INDUSTRIAL COOPERATION FOUNDATION CHONBUK NATIONAL UNIVERSITY) 30 December 2014 (2014-12-30)<br>entire document | 1-10 |

## INTERNATIONAL SEARCH REPORT
### Information on patent family members

International application No.

**PCT/CN2024/101736**

| Patent document cited in search report | | | Publication date (day/month/year) | Patent family member(s) | | | Publication date (day/month/year) |
|---|---|---|---|---|---|---|---|
| CN | 116799817 | A | 22 September 2023 | None | | | |
| CN | 109494769 | A | 19 March 2019 | CN | 109494769 | B | 06 November 2020 |
| CN | 111884267 | A | 03 November 2020 | CN | 111884267 | B | 21 December 2021 |
| CN | 112994048 | A | 18 June 2021 | CN | 112994048 | B | 10 September 2021 |
| CN | 114336671 | A | 12 April 2022 | None | | | |
| US | 8922043 | B1 | 30 December 2014 | JP | 5664889 | B1 | 04 February 2015 |
| | | | | JP | 2015171315 | A | 28 September 2015 |
| | | | | KR | 101398400 | B1 | 27 May 2014 |

Form PCT/ISA/210 (patent family annex) (July 2022)